# EUROPEAN PATENT APPLICATION

(11) **EP 1 081 840 A1**
(43) Date of publication of application: **07.03.2001**
(21) Application number: 99117549.8
(22) Date of filing: 06.09.1999
(51) Int. Cl.: H02M 3/338

(54) **DC-DC Converter**

(71) Applicant: THOMSON multimedia S.A., 92648 Boulogne Cedex (FR)
(72) Inventor: Koh, Kian Meng, Singapore 731897 (SG); Zee, Yoong Kum, Johor Bahru, 811000 Johor (MY); NG, Huat Seng, Whye, Singapore 680154 (SG)
(74) Representative: Rossmanith, Manfred, Dr.

(57) **Abstract**

The DC-DC converter comprises a window circuit (WIC) which is coupled to the current input (1) of the switching transistor (T20) and which provides a current information for the driver stage for driving the switching transistor. The window circuit sets a time window controlled by the driver stage during which the voltage above the switching transistor is monitored. Therefore, during the "on"-time of the switching transistor, its internal resistance is used as a sensing resistor.

In a special embodiment this voltage information is transferred into an additional current for a control capacitor (C22) of the driver stage which determines the switching cycle of the switching transistor. The window circuit can be easily integrated into the driver stage with the timing window set synchronously with the switching-on time of the switching transistor. This is especially advantageous for a DC-DC converter with a switching transistor (T20) working with a switching-on time point which is set to zero Volt or to a voltage minimum at the current input (1).

## Description

The present invention relates to a DC-DC converter comprising a switching transistor, a transformer with a primary winding in series with the switching transistor, a driver stage and a regulation loop.

Switched mode power supplies are widely used in appliances for consumer electronics, as for example television sets and video recorders. They comprise usually a single switching transistor and a transformer, working in flyback mode, and a regulation loop for stabilising one or several output voltages. Within the regulation loop, for example, a control voltage which is depending on an output voltage at the secondary side which has to be stabilised is transferred via an optocoupler to the primary side for regulation purpose or, as a control voltage the voltage of an auxiliary winding arranged at the primary side is used. In addition, a control voltage is used from a sensing resistor, which is in series with the switching transistor. These control voltages are used within the driver stage for driving the switching transistor, which may be performed by changing the duty cycle and/or by changing the switching frequency. Switch mode power supplies of this kind work with a mains voltage of usually 230 V or 120 V and are disclosed for example in EP-A-0 936 726 and DE-A-197 35 208.

A power supply of this kind cannot be used as a DC-DC converter working with a low input DC voltage, for example, with 12 V from a car battery. The current flowing into the primary winding and the switching transistor as well as to the sensing resistor is much higher to provide the necessary output power. The current can rise for example above 10 Amperes, with peak values as high as 16 Amperes, which gives a very high dissipation in the sensing resistor proportional to the square of the current. This would require a big heat sink even when using a very low resistance value.

To overcome this problem a double stage switch-mode power supply could be used with an unregulated step-up converter for providing a DC voltage of about 200 - 300 V in front of the regulated power supply. But this method is expensive and requires more space.

The object of the invention is therefore to provide a regulated single stage DC-DC converter using a current sensing circuit and being able to work on low DC input voltages.

This object is achieved by means of the invention as specified in claim 1. Advantageous developments of the invention are specified in the subclaims.

The DC-DC converter of the invention comprises a window circuit which is coupled to the current input of the switching transistor and which provides a current information to the driver stage for driving the switching transistor. The window circuit sets a time window controlled by the driver stage during which the voltage above the switching transistor is monitored. Therefore, during the "on"-time of the switching transistor, its internal resistance is used as a sensing resistor. In a special embodiment this voltage information is transferred into an additional current for a control capacitor of the driver stage which determines the switching cycle of the switching transistor.

The window circuit can be easily integrated into the driver stage with the timing window set synchronously with the switching-on time of the switching transistor. This is especially advantageous for a DC-DC converter with a switching transistor working with a switching-on time point which is set at zero Volt or at a voltage minimum of the current input.

In a further embodiment the driver stage of the DC-DC converter comprises a transistor pair switching in a Darlington switching mode for driving the switching transistor and the control input of the window circuit is connected with a control input of the second transistor of the two transistors.

The invention is explained in more detail below, by way of examples, with reference to schematic circuit diagrams, which show:
- Figure 1: a switched-mode power supply according to prior art working with mains voltage,
- Figure 2: a window circuit for a DC/DC converter according to the invention,
- Figure 3: a time diagram of the transistor voltage with a timing window.

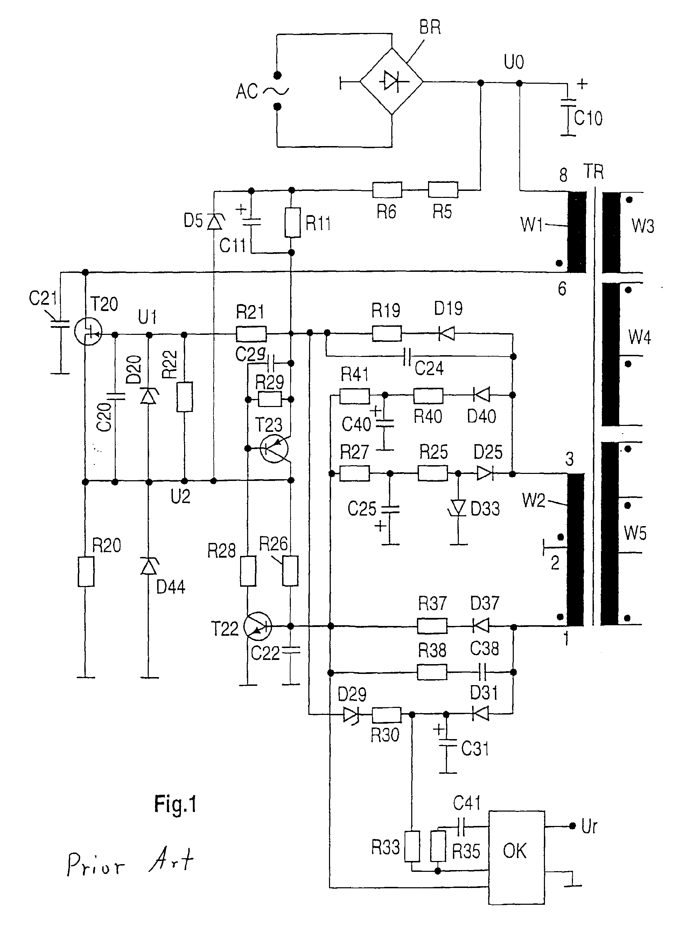

The switched-mode power supply illustrated in Fig. 1 comprises a rectifier element BR for rectifying an alternating mains voltage AC and a charge capacitor C10 for providing a smoothed DC voltage U0. It comprises further a transformer TR with a primary winding W1 which is connected with a terminal 8 to the capacitor C10 and with a terminal 6 to a switching transistor T20 being in series with a sensing resistor R20. The transformer comprises further windings W3, W4 and W5 arranged at the secondary side for providing respective output voltages and an auxiliary winding W2 at the primary side for providing power and control voltages for a driver stage and the switching transistor T20. The driver stage comprises a control capacitor C22 and transistors T22 and T23 for the control of the switching transistor T20.

The switched-mode power supply works in a flyback mode and comprises a feedback loop from the secondary side for stabilising the output voltages of the transformer TR. Within the feedback loop a regulating voltage Ur is generated at the secondary side, which is transferred to the primary side for example via an optocoupler OK. At the primary side the optocoupler OK provides together with a circuitry R33, R35 and C41, connected to a charge capacitor C31, a current for the control capacitor C22.

The sensing resistor R20 provides a further current via resistor R26 to the control capacitor C22. Control capacitor C22 is further connected via a first current path R41, R40 and diode D40 and with a second current path via resistors R27 and R25 and diode D25 with a terminal 3 of the winding W2. Because of the polarity of the diodes D40 and D25 the first current path is sensitive to the forward positive voltage at terminal 3 which is proportional to the input voltage U0. Herewith different mains voltages AC are taken into consideration within the regulation. The second current path is sensitive to the flyback negative voltage at terminal 3, which is proportional to the secondary output voltages. This provides a soft start function for the power supply.

From the terminal 1 of the winding W2 a current is provided via diode D37 and resistor R37 to the control capacitor C22 during the switch-off phase of switching transistor T20 which keeps transistor T22 conducting as long as magnetic energy is stored in the transformer TR. Capacitor C38 and resistor R38 provide a current for a delayed switching- on of transistor T20, the values being adjusted that the switch-on time falls into the first minimum of the voltage at the current input of switching transistor T20. This prevents also that the conducting time of the switching transistor T20 is too short in a low-power mode. This could lead to unstable switching cycles of the switching transistor, which might damage it.

The control electrode of the switching transistor T20 is connected via resistors R21 and R19, diode D19 and capacitor C24 with a terminal 3 of the auxiliary winding W2 which provides in the conducting phase of the switching transistor T20 a positive voltage for keeping the switching transistor T20 being switched on. With the regulating mechanisms as described, the switched mode power supply is self-oscillating with a switching frequency depending on the output load.

The transistors T22 and T23 are connected via resistors RR26, R28 and R29 in a Darlington mode for providing a very fast switching of the control voltage U1 of the switching transistor T20. At a certain threshold voltage at the capacitor C22, the transistor T22 switches through and therefore also the transistor T23 which connects the control electrode of switching transistor T20 via resistors R21 and R20 with ground. Resistors R21 and R20 have low values, in this embodiment 22 Ohm and 4,7 Ohm.

With all the current information as explained above, the control capacitor C22 defines the switching-on time of the transistors T22 and T23 and therefore the switching-off time of the switching transistor T20. This defines the switched-on phase of transistor T20 and herewith the power transferred to the secondary side. Switched mode power supplies of this kind are disclosed for example in DE-A-197 35 208 and EP-A-0 936 726. A power supply with a switch-on time of the switching transistor in a voltage minimum is also disclosed in EP-A-0 701 318.

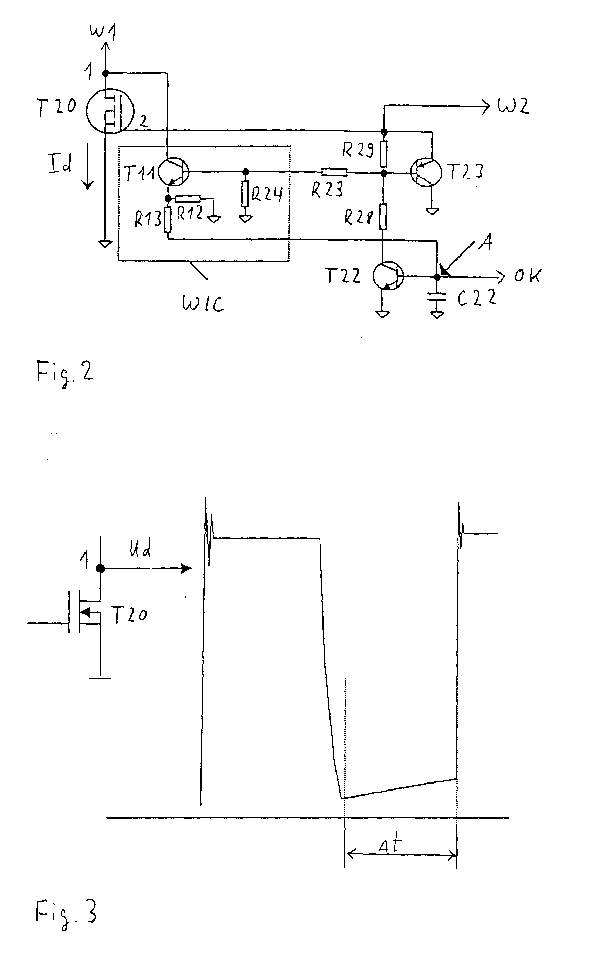

In Figure 2, a window circuit (WIC) is shown according to the invention which is integrated into the switched-mode power supply of the Figure 1, and which replaces the sensing resistor R20 of Figure 1. The window circuit is coupled with a first input via resistor R23 with the driver stage which defines the time window for the sensing current and with the second input with the current input 1 of the switching transistor T20 for transforming the voltage above the switching transistor T20 into a current for the control capacitor C22.

In this embodiment the switching transistor T20 is a power MOSFET which has a defined drain source resistance and which can be used as a sensing resistor during the on-time of the switching transistor. This circuit provides the additional advantage that the reliability of the power MOSFET is improved because of its positive temperature coefficient. When the resistance increases with temperature, the higher voltage at current input 1 provides a higher current for the control capacitor C22 and therefore the transistor T22 switches faster on which switches the power MOSFET T20 faster off.

The window circuit WIC comprises only a single transistor stage with a transistor T11 which is connected with its collector to the current input 1 of the switching transistor T20 and with its emitter to two resistors R12 and R13, resistor R13 connected to control capacitor C22 and resistor R12 to ground. The resistors R12 and R13 provide a current divider and their values are fine-tuned to select the limitation level of the current flowing to the switching transistor T20. The current Id of the drain-source resistance is therefore transformed into a sensing current for the control capacitor C22.

Circuit elements which are the same in Figure 1 and Figure 2 are labeled with the same reference numbers. The circuit of Figure 2 is coupled to the windings W1 and W2 of the transformer TR and to the optocoupler OK as shown in Figure 1. Arrow A shows the circuit node being connected to the control capacitor C22 which collects all regulation information for the driver stage.

During the switch-on phase of the switching transistor T20 the control capacitor C22 is charged as explained above by the regulation currents from the secondary and the primary side. At a certain threshold voltage the transistor T22 switches through and therefore transistor T23 which sets the control input 2 of the switching transistor T20 to a low voltage causing its switching off. During the switch-off phase the capacitor C22 is discharged and when the magnetic energy stored in the transformer is transferred to the secondary side the switching transistor T20 is switched on again via auxiliary winding W2, and delayed via the circuit node A as explained already according to Figure 1. Because the control electrode of the transistor T11 is coupled via resistor R20 with a control electrode of the transistor T23, the time window of the window circuit WIC is the same as a switch-on phase of the switching transistor T20 because transistor T11 is switched through when the transistors T22 and T23 are closed.

Because the switching transistor T20 switches on in a voltage minimum as explained according to Figure 1, the voltage Ud above the switching transistor T20 is low at the beginning of the time window Δt as shown in Figure 3. This leads to a low noise contribution for the sensing current. The voltage during this time window is proportional to the drain current in case of a power MOSFET as a switching transistor T20. Because of the fast switching-on of the power MOSFET which is faster than the response of the transistor T11, a switching-off spike at the end of the window Δt may remain but this implies no problems for the function of the window circuit WIC. Therefore, with a window circuit comprising only one transistor stage with only a few parts a very efficient circuit for sensing the transistor current of the switching transistor T20 can be achieved.

## Claims

1. DC-DC converter comprising a switching transistor (T20), a transformer (TR) with a primary winding (W1) in series with said switching transistor (T20), a driver stage and a regulation loop (UR, OK), **characterised in that** a current input (1) of said switching transistor (T20) is coupled to a window circuit (WIC) which is controlled by the driver stage and which provides a current information for driving said switching transistor (T20).

2. DC-DC converter according to Claim 1, **characterised in that** said window circuit (WIC) provides an additional current to a control capacitor (C22) of said driver stage to which a current from the regulation loop (UL, UK) is provided.

3. DC-DC converter according to Claim 2, **characterised in that** said control capacitor (C22) is coupled to two transistors (T22, T23) of said driver stage which are connected in a Darlington switching mode, and which control the time window of said window circuit (WIC) and the switching cycle of said switching transistor (T20).

4. DC-DC converter according to Claim 3, **characterised in that** the first transistor (T22) is coupled with its control electrode to said control capacitor (C22) and the second transistor (T23) is coupled with its control electrode to the current input of the first transistor (T22) and with its current input to the control electrode of the switching transistor (T20) for providing a switching voltage for the switching transistor (T20), and that the control input of the window circuit (WIC) is coupled to the control electrode of the second transistor (T23).

5. DC-DC converter according to one of the preceding claims, **characterised in that** it works in a flyback mode with switching-on of the switching transistor (T20) at zero Volts or in a voltage minimum, and that the time window is defined by the switching cycle of the switching transistor (T20).

6. DC-DC converter according to one of the preceding claims 2-5, **characterised in that** the window circuit (WIC) comprises a transistor coupled to the current input (1) of the switching transistor (T20) and a current divider (R12, R13) for providing a sensing current to said control capacitor (C22).

7. DC-DC converter according to one of the preceding claims, **characterised in that** the switching transistor (T20) is a Power-MOSFET with positive temperature coefficient.
